# EUROPÄISCHE PATENTANMELDUNG

(11) **EP 0 523 469 A1**
(43) Veröffentlichungstag der Anmeldung: **20.01.1993**
(21) Anmeldenummer: 92111275.1
(22) Anmeldetag: 03.07.1992
(51) Int. Cl.: B01D 53/34, F02C 3/30

(54) **Verfahren und Anlage zum Vermindern der Stickoxid-Emission einer Gasturbine**

(30) Priorität: 18.07.1991 DE 4123908
(71) Anmelder: SIEMENS AKTIENGESELLSCHAFT, D-80333 München (DE)
(72) Erfinder: Emsperger, Werner, Dipl.-Ing., W-8520 Erlangen (DE)

(57) **Zusammenfassung**

Zum Vermindern der Stickoxid-Emission einer Gasturbine (2), der ein in einer Brennkammer (8) unter Zufuhr von verdichteter Luft (L) erzeugtes Arbeitsmittel (RG) und ein Kühlmittel (KL) zugeführt wird, wird erfindungsgemäß dem Kühlmittel (KL) ein Reduktionsmittel (RM), vorzugsweise Ammoniak (NH₃), zum Reduzieren von Stickoxiden (NOₓ) in der Gasturbine (2) zugemischt.

## Beschreibung

Die Erfindung betrifft ein Verfahren zum Vermindern der Stickoxid-Emission einer Gasturbine, der ein in einer Brennkammer unter Zufuhr von verdichteter Luft erzeugtes Arbeitsmittel und ein Kühlmittel zugeführt wird.

Beim Betrieb einer Gasturbine in einer Gasturbinenanlage wird üblicherweise eine Verminderung der Bildung von Stickoxiden (NOₓ) schon bei der Erzeugung des Arbeitsmittels in der Brennkammer angestrebt. Zu diesem Zweck sind bereits unterschiedliche Verfahren bekannt, die in Abhängigkeit vom eingesetzten Brennstoff, zum Beispiel Erdgas, Erdöl oder Kohle, entweder getrennt oder in geeigneter Kombination miteinander durchgeführt werden. Bei Verwendung eines gasförmigen Brennstoffs wird dieser bereits vor der Zündung in der Brennkammer mit der zur Erzeugung des Arbeitsmittels erforderlichen verdichteten Luft gemischt. Eine weitere Möglichkeit besteht darin, dem Brennstoff in der Brennkammer Dampf zuzumischen. Bei einem vorzugsweise in einer kombinierten Gas- und Dampfturbinenanlage mit Kohlevergasung angewendeten Verfahren wird dem Brennstoff in der Brennkammer Stickstoff zugemischt, der in dem Prozeß selbst erzeugt wird. Durch die genannten Verfahren wird der Anteil an Stickoxiden im Arbeitsmittel bereits bei dessen Erzeugung dadurch gering gehalten, daß die Verbrennungstemperatur gesenkt und damit örtliche Temperaturspitzen als Ursache für die Bildung von thermischen Stickoxiden vermieden werden.

Aufgrund der im Zuge der Entwicklung ständig steigenden Leistungsfähigkeit der Gasturbine durch Erhöhen der Temperatur des Arbeitsmittels, beispielsweise ermöglicht durch Kühlung der Turbinenschaufeln mit einem Kühlmittel, wird für die genannten Maßnahmen zur Verminderung der Stickoxid-Emission eine Grenze erreicht. Es ist dann erforderlich, zusätzlich einen Katalysator in den Abgasstrom der Gasturbine einzuschalten. Bei einer kombinierten Gas- und Dampfturbinenanlage ist dieser üblicherweise in den Dampferzeuger integriert. Dies erfordert allerdings einen erhöhten Material- und Kostenaufwand und ist somit unwirtschaftlich.

Der Erfindung liegt daher die Aufgabe zugrunde, ein Verfahren anzugeben, das mit einfachen Mitteln eine möglichst niedrige Stickoxid-Emission beim Betrieb einer Gasturbinenanlage oder einer kombinierten Gas- und Dampfturbinenanlage ermöglicht. Weiterhin soll eine Gasturbinenanlage angegeben werden, die neben einem möglichst geringen Stickoxidanteil im Abgas der Gasturbine einen hohen Wirkungsgrad aufweist.

Bezüglich des Verfahrens wird diese Aufgabe erfindungsgemäß dadurch gelöst, daß dem Kühlmittel ein Reduktionsmittel zum Reduzieren von Stickoxiden zugemischt wird. Mit dem zusammen mit dem Kühlmittel in die Gasturbine eingebrachten Reduktionsmittel wird zumindest ein Teil der im Arbeitsmittel enthaltenen Stickoxide noch innerhalb der Gasturbine zu elementarem Stickstoff reduziert; somit ergibt sich eine zusätzliche Möglichkeit, den Stickoxid-Anteil im Abgas der Gasturbine unterhalb des gesetzlich vorgegebenen Grenzwertes zu halten.

Um einen wirkungsvollen Einsatz des Reduktionsmittels in der Gasturbine zu erreichen, wird dieses einer Gasturbinenstufe zugeführt, in der die Temperatur des Arbeitsmittels unterhalb der Temperatur liegt, bei der das Reduktionsmittel verbrennt und dabei zusätzliche Stickoxide bildet. Dies ist insbesondere dann erforderlich, wenn die Temperatur des Arbeitsmittels bei Eintritt in die Gasturbine oberhalb dieser Reaktionstemperatur des Reduktionsmittels liegt.

Als Reduktionsmittel wird vorteilhafterweise Ammoniak (NH₃) verwendet.

Um den Stickoxid-Anteil im Arbeitsmittel bereits vor dessen Eintritt in die Gasturbine möglichst gering zu halten, wird in vorteilhafter Weiterbildung des erfindungsgemäßen Verfahrens bei Verwendung eines gasförmigen oder flüssigen Brennstoffs zur Erzeugung des Arbeitsmittels der Brennkammer Dampf zugeführt. Alternativ kann zur Vermeidung einer örtlichen Überhitzung in der Brennkammer der Brennstoff bereits vor der Verbrennung mit der verdichteten Luft gemischt werden. Bei Verwendung von Kohlegas zur Erzeugung des Arbeitsmittels wird vorteilhafterweise der Brennkammer Stickstoff zugeführt. Durch die Kombination einer oder mehrerer dieser an sich bekannten Maßnahmen mit dem erfindungsgemäßen Verfahren tritt ein synergistischer Effekt auf, der besonders vorteilhaft bei einem verhältnismäßig geringen Aufwand eine weitere Verminderung der Stickoxid-Emission bewirkt.

Gemäß einer weiteren vorteilhaften Weiterbildung des erfindungsgemäßen Verfahrens wird als Kühlmittel ein Teil der verdichteten Luft verwendet.

Bezüglich der Anlage, die einen Verdichter, eine Brennkammer und eine Gasturbine sowie eine Kühlmittelleitung zum Zuführen von Kühlmittel in die Gasturbine umfaßt, wird die gestellte Aufgabe dadurch gelöst, daß dem Kühlmittel ein Reduktionsmittel zum Reduzieren von Stickoxiden in der Gasturbine zumischbar ist. Dabei ist vorteilhafterweise die Kühlmittelleitung an die Druckseite des Verdichters angeschlossen, so daß kein zusätzliches Kühlmittel bereitgestellt werden muß.

Ein Ausführungsbeispiel der Erfindung wird anhand einer Zeichnung näher erläutert. Sie zeigt in einer schematischen Darstellung eine Gasturbinenanlage mit einer Kühlluftleitung, in die ein Reduktionsmittel einspeisbar ist.

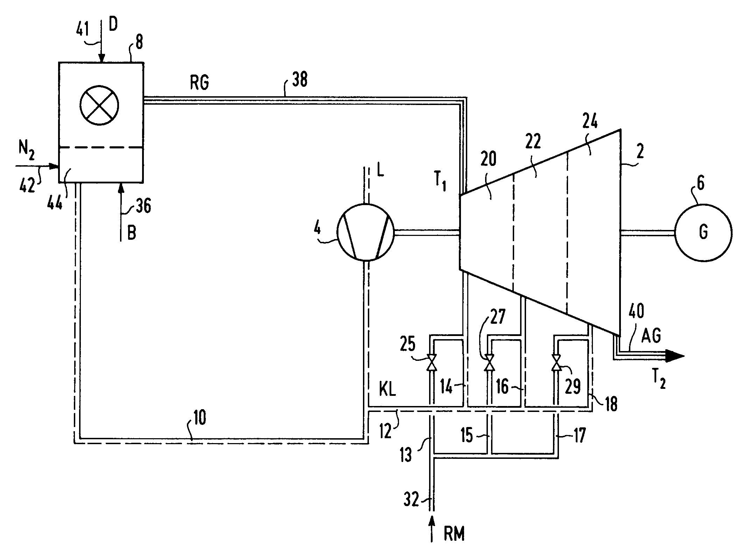

Die Gasturbinenanlage gemäß der Figur umfaßt eine Gasturbine 2 mit angekoppeltem Luftverdichter 4 und Generator 6 sowie eine der Gasturbine 2 vorgeschaltete Brennkammer 8. Der Luftverdichter 4 liegt in einer Leitung 10, die in die Brennkammer 8 mündet.

Auf der Druckseite des Luftverdichters 4 ist an die Leitung 10 eine Kühlluftleitung 12 angeschlossen, die über Zweige 14, 16 und 18 in verschiedene Stufen 20, 22 bzw. 24 der Gasturbine 2 mündet. An die Zweige 14, 16 und 18 sind Leitungen 13, 15 bzw. 17 angeschlossen, die mit einer gemeinsamen Leitung 32 zum Zuführen eines Reduktionsmittels RM verbunden sind. In die Leitungen 13, 15 und 17 sind Einzelvorrichtungen oder Ventile 25, 27 bzw. 29 geschaltet.

Beim Betrieb der Gasturbinenanlage wird der Brennkammer 8 über eine Brennstoffleitung 36 Brennstoff B, zum Beispiel Erdgas oder Kohlegas aus einer nicht dargestellten Kohlevergasungsanlage, zugeführt. Der Brennstoff B wird in der Brennkammer 8 mit verdichteter Frischluft L aus dem Luftverdichter 4 verbrannt. Das bei der Verbrennung entstehende heiße Rauchgas RG dient als Arbeitsmittel und wird über eine Rauchgasleitung 38 in die Gasturbine 2 geleitet. Dort entspannt sich das Rauchgas RG und treibt dabei die Turbine 2 an. Diese wiederum treibt den Luftverdichter 4 und den Generator 6 an. Das Arbeitsmittel oder Rauchgas RG weist bei Eintritt in die Gasturbine 2, das heißt bei Eintritt in die erste Stufe 20, eine hohe Temperatur T1, insbesondere von mehr als 1100 °C, auf. Die Temperatur des Arbeitsmittels RG nimmt über die Stufen 20, 22 und 24 ab, und beträgt beispielsweise am Ende der Stufe 24 noch etwa 550 °C. Mit dieser Temperatur T2 von etwa 550 °C verläßt das Arbeitsmittel RG die Gasturbine 2 als Abgas AG über eine Abgasleitung 40 in Richtung auf einen nicht dargestellten Kamin. Das Abgas AG kann auch in bekannter Art und Weise zur Erzeugung von Dampf in einem Abhitzedampferzeuger einer Dampfturbinenanlage genutzt werden.

Das in der Gasturbine 2 über die Stufen 20, 22 und 24 stufenweise entspannte und sich dabei abkühlende Arbeitsmittel oder Rauchgas RG nimmt im Bereich höherer Temperatur als Kühlmittel dienende Kühlluft KL - insbesondere aus Leit- und Laufschaufeln abströmende Kühlluft KL - auf. Dabei ist der Ort und die Menge der einzuspeisenden Kühlluft KL von der Eintrittstemperatur T1 abhängig.

Mit der Kühlluft KL wird das über die Leitung 32 zugeführte Reduktionsmittel RM, zum Beispiel Ammoniak, in die Gasturbine 2 eingebracht, wobei es sich vor Eintritt in die Gasturbine 2 mit der Kühlluft KL und in der Gasturbine 2 mit dem Arbeitsmittel RG vermischt. Dabei wird durch geeignete Einstellung der Ventile 25 bis 30 die jeweils in Abhängigkeit von der Eintrittstemperatur T1 in einem für die Reduktion günstigen Temperaturbereich liegende Stufe 20, 22 oder 24 mit dem Gemisch aus Kühlluft KL und Reduktionsmittel RM beaufschlagt. Die maximale Temperatur des Arbeitsmittels RG in der jeweiligen Stufe 20, 22 oder 24 sollte innerhalb des Bereichs der Reaktionstemperatur des Reduktionsmittels RM mit den Stickoxiden liegen. Dies bedeutet, daß bei einer hohen Eintrittstemperatur T1 des Arbeitsmittels RG von z.B. 1100° C der ersten Stufe 20 bei geschlossenem Ventil 25 lediglich Kühlluft KL zugeführt wird. Das Reduktionsmittel RM wird dann erst der zweiten Stufe 22 und gegebenenfalls auch der dritten Stufe 24 bei geöffneten Ventilen 27 und 29 zusammen mit der über die Zweige 16 und 18 strömenden Kühlluft KL zugeführt. In jedem Fall muß gewährleistet sein, daß die Verbrennungstemperatur des Reduktionsmittels RM nicht überschritten wird. Bei dieser Reaktion wird bei Verwendung von Ammoniak Stickstoff und Wasser erzeugt.

Um eine Verminderung des Anteils an Stickoxiden schon bei der Erzeugung des Arbeitsmittels RG in der Brennkammer 8 zu erreichen, wird dieser in Abhängigkeit vom eingesetzten Brennstoff B über eine Leitung 41 Dampf D oder über eine Leitung 42 Stickstoff N₂ zugeführt. Um eine Vermischung der Verbrennungsluft oder Frischluft L und des Brennstoffs B vor dem Zünden in der Brennkammer 8 zu erreichen, ist dieser eine Vormischstufe 44, zum Beispiel ein Vormischbrenner, vorgeschaltet.

## Patentansprüche

1. Verfahren zum Vermindern der Stickoxid-Emission einer Gasturbine (2), der ein in einer Brennkammer (8) unter Zufuhr von verdichteter Luft (L) erzeugtes Arbeitsmittel (RG) und ein Kühlmittel (KL) zugeführt wird, **dadurch gekennzeichnet,** daß dem Kühlmittel (KL) ein Reduktionsmittel (RM) zum Reduzieren von Stickoxiden (NOₓ) zugemischt wird.

2. Verfahren nach Anspruch 1, **dadurch gekennzeichnet,** daß das Reduktionsmittel (RM) einer Gasturbinenstufe (20, 22, 24) zugeführt wird, in der die Temperatur (T₁) des Arbeitsmittels (RG) unterhalb der Verbrennungstemperatur des Reduktionsmittels (RM) liegt.

3. Verfahren nach Anspruch 1 oder 2, **dadurch gekennzeichnet,** daß als Reduktionsmittel (RM) Ammoniak (NH₃) verwendet wird.

4. Verfahren nach einem der Ansprüche 1 bis 3, **dadurch gekennzeichnet,** daß bei Verwendung eines gasförmigen oder flüssigen Brennstoffs zur Erzeugung des Arbeitsmittels (RG) der Brennkammer (8) Dampf (D) zugeführt wird.

5. Verfahren nach einem der Ansprüche 1 bis 3, **dadurch gekennzeichnet,** daß bei Verwendung von Kohlegas zur Erzeugung des Arbeitsmittels (RG) der Brennkammer (8) Stickstoff (N₂) zugeführt wird.

6. Verfahren nach einem der Ansprüche 1 bis 3, **dadurch gekennzeichnet,** daß bei Verwendung eines gasförmigen Brennstoffs zur Erzeugung des Arbeitsmittels (RG) der Brennstoff vor der Verbrennung in der Brennkammer (8) mit der verdichteten Luft (L) gemischt wird.

7. Verfahren nach einem der Ansprüche 1 bis 6, **dadurch gekennzeichnet,** daß als Kühlmittel (KL) ein. Teil der verdichteten Luft (L) verwendet wird.

8. Gasturbinenanlage mit einem Verdichter (4), einer Brennkammer (8) und einer Gasturbine (2) sowie mit einer Kühlmittelleitung (12) zum Zuführen von Kühlmittel (KL) in die Gasturbine, insbesondere zur Durchführung des Verfahrens nach einem der Ansprüche 1 bis 7, **dadurch gekennzeichnet,** daß dem Kühlmittel (KL) ein Reduktionsmittel (RM) zum Reduzieren von Stickoxiden (NOₓ) in der Gasturbine (2) zumischbar ist.

9. Anlage nach Anspruch 8, **dadurch gekennzeichnet,** daß die Kühlmittelleitung (12) an die Druckseite des Verdichters (4) angeschlossen ist.

10. Anlage nach Anspruch 8 oder 9, **dadurch gekennzeichnet,** daß die Brennkammer (8) eine Vormischstufe (44) umfaßt.
